# EUROPÄISCHE PATENTSCHRIFT

(11) **EP 0 408 877 B1**
(45) Veröffentlichungstag und Bekanntmachung des Hinweises auf die Patenterteilung: **13.10.1993**
(21) Anmeldenummer: 90110423.2
(22) Anmeldetag: 01.06.1990
(51) Int. Cl.: G01P 3/48

(54) **Verfahren zur Drehzahlermittlung einer Brennkraftmaschine**
Method of determination of rotational speed of an internal combustion engine
Procédé pour déterminer la vitesse angulaire d'un moteur à combustion interne

(30) Priorität: 15.07.1989 DE 3923532
(43) Veröffentlichungstag der Anmeldung: 23.01.1991
(73) Patentinhaber: ROBERT BOSCH GMBH, 70442 Stuttgart (DE)
(72) Erfinder: Schlienz, Ulrich, Dipl.-Ing., D-7333 Ebersbach-Rosswälden (DE); Sieg, Raymond, Dipl.-Ing., D-7000 Stuttgart 50 (DE)

(56) Entgegenhaltungen:
- EP-A- 0 315 357
- FR-A- 2 337 886
- PATENT ABSTRACTS OF JAPAN vol. 7, no. 109 (P-196)(1254) 12 Mai 1983, & JP-A-58 30672 (ISHIAWAAJIMA HARIMA JUKOGYO K.K.) 23 Februar 1983,

## Beschreibung

### Stand der Technik

Die Erfindung betrifft ein Verfahren zur Ermittlung der Drehzahl einer Brennkraftmaschine mit bekannter Zylinderzahl.

Es ist allgemein bekannter Stand der Technik, die an einer Zündspule einer fremdgezündeten Brennkraftmaschine auftretenden Impulse in ein Drehzahlsignal umzuwandeln und anzuzeigen. Diese einfache Möglichkeit der Drehzahlerfassung ist bei Fahrzeugen mit Dieselmotoren nicht anwendbar. Die Drehzahl wird in diesen Fallen dann beispielsweise mit einem optoelektronischen Gebersystem erfaßt.

Aus der EP-A 0 315 357 ist eine Vorrichtung bekannt, die ein Signal abgibt, das ein Maß für die Drehzahl einer Brennkraftmaschine ist. Die Vorrichtung enthält eine signalverarbeitende Anordnung, die das Maß für die Drehzahl aus einem Bordnetz ableitet, das mehrere elektrische Komponenten enthält, die zum Teil zum Betreiben der Brennkraftmaschine erforderlich sind. Hingewiesen ist insbesondere auf eine Zündanlage, die zum Zünden der fremdgezündeten Brennkraftmaschine vorgesehen ist. Störimpulse auf dem Bordnetz, die den Zündimpulsen der Brennkraftmaschine entsprechen, sind besonders geeignet zum Ableiten eines Signals als Maß für die Drehzahl der Brennkraftmaschine. Mit der bekannten Vorrichtung ist es nicht ohne weiteres möglich, die tatsächliche Drehzahl anzugeben.

Der Erfindung liegt die Aufgabe zugrunde, ein einfaches Verfahren zur Ermittlung der Drehzahl einer Brennkraftmaschine mit bekannter Zylinderzahl anzugeben, das insbesondere auch für die Drehzahlermittlung von Diesel-Brennkraftmaschinen geeignet ist.

Diese Aufgabe wird durch die im Anspruch 1 angegebenen Merkmale gelöst.

### Vorteile der Erfindung

Eine signalverarbeitende Anordnung ermittelt die Drehzahl aus einem am Generator oder an einer Last auftretenden Signal. Das Signal enthält einen ersten Signalanteil, der einem Wechselspannungsanteil der von einem von der Brennkraftmaschine mit gegebenem Übersetzungsverhältnis angetriebenen Generator entspricht. Das am Generator oder an der Last auftretende Signal enthält einen zweiten, niederfrequenteren Signalanteil, der durch die diskontinuierliche Arbeitsweise der Brennkraftmaschine, bedingt durch die Verbrennung in den einzelnen Zylidnern, verursacht ist. Der erste Signalanteil ist mit dem zweiten Signalanteil frequenzmoduliert. Die signalverarbeitende Anordnung ermittelt das Übersetzungsverhältnis zwischen Brennkraftmaschine und Generator aus dem Verhältnis der Frequenz des ersten Signalanteils und der Frequenz des zweiten Signalanteils.

Das erfindungsgemäße Verfahren weist zunächst den Vorteil einer leichten Adaption am Fahrzeug auf. Es wird lediglich ein Anschluß an das elektrische Bordnetz des Kraftfahrzeugs benötigt, der beispielsweise am Zigarettenanzünder erfolgen kann. Da keine speziellen Sensoren erforderlich sind, eignet sich die erfindungsgemäße Vorrichtung in besonderem Maße zur Drehzahlermittlung von Diesel-Brennkraftmaschinen.

Die Ermittlung der Drehzahl ist auch während der Fahrt möglich. Diese Anwendung gewinnt an Bedeutung im Rahmen der Abgassonderuntersuchung, die Vollastbetrieb bei der Abgasmessung für Dieselfahrzeuge vorschreibt und wobei nicht vorausgesetzt werden kann, daß jede Prüfstelle einen Leistungsprüfstand zur Verfügung hat.

Vorteilhafte Weiterbildungen und Verbesserungen des erfindungsgemäßen Verfahren sind in den abhängigen Ansprüchen angegeben. In einer vorteilhaften Weiterbildung wird der niederfrequente Signalanteil mit einem Frequenz-Modulations-(FM)-Demodulator aus dem ersten Signalanteil ermittelt.

Das beispielsweise vom Bordnetz abgegriffene elektrische Signal ist aufgrund von überlagerten Störungen, die insbesondere vom Generatorregler hervorgerufen werden, zweckmäßigerweise einer Signalfilterung mit einem Bandpaßfilter zu unterziehen. Besonders vorteilhaft erweist sich die Verwendung eines adaptiven Filters, mit dem eine gute Störunterdrückung über die gesamte Nutzbandbreite des zu erwartenden Signalspektrums bei einem maximalen Verhältnis von Nutzsignal/Störsignal zu erreichen ist.

In einer vorteilhaften Ausgestaltung des erfindungsgemäßen Verfahrens ist vorgesehen, den ersten höherfrequenten Signalanteil des Bordnetzsignals aus den Kommutierungsschwingungen abzuleiten, die bei der Kommutierung eines von einem Drehstromgenerator abgegebenen Stroms von einem Gleichrichter auf den nächsten Gleichrichter entstehen.

Vorteilhaft ist der geringe Hardware-Aufwand, weil die gesamte Signalverarbeitung und gegebenenfalls die Plausibilätskontrollen als Programm in der signalverarbeitenden Anordnung realisierbar sind.

Vorteilhafte Weiterbildungen und Verbesserungen ergeben sich aus weiteren abhängigen Ansprüchen in Verbindung mit der folgenden Beschreibung.

### Zeichnung

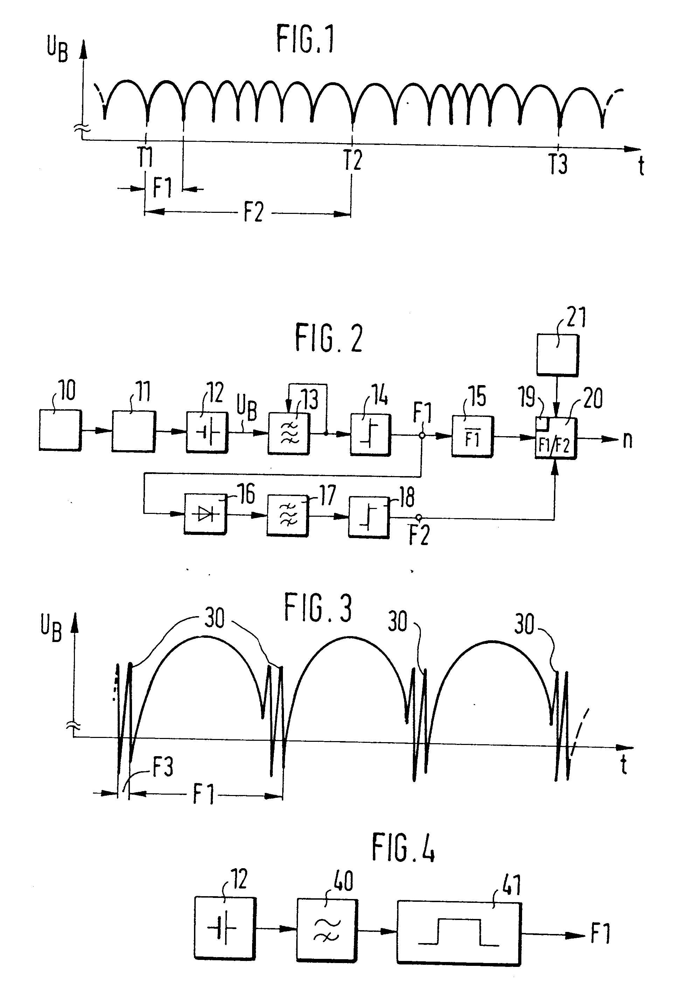

Figur 1 zeigt einen Spannungsverlauf eines von einem Generator versorgten Bordnetzes eines Kraftfahrzeugs, Figur 2 zeigt ein Blockschaltbild einer signalverarbeitenden Anordnung zur Ermittlung der Drehzahl einer Brennkraftmaschine des Kraftfahrzeugs, Figur 3 zeigt den in Figur 1 gezeigten Signalverlauf mit höherer zeitlicher Auflösung und Figur 4 zeigt das Blockschaltbild einer signalverarbeitenden Anordnung zur Ermittlung eines ersten Signalanteils aus dem in Figur 1 bzw. Figur 3 gezeigten Signalverlauf.

Figur 1 zeigt den Spannungsverlauf U_{B} eines von einem Generator versorgten Bordnetzes eines Kraftfahrzeugs. Gezeigt ist nur der Wechselspannungsanteil unter Weglassung des erheblich höheren Gleichspannungsanteils. Der parabelbogenähnliche Signalverlauf entsteht durch Gleichrichtung und Überlagerung von mehreren Phasen eines als Drehstromgenerator ausgebildeten Generators. Anstelle eines Drehstromgenerators mit Gleichrichtern kann auch ein Gleichstromgenerator oder ein Wechselstromgenerator mit einer oder mehreren Phasen ohne Gleichrichter vorgesehen sein. Ein Wechselstromgenerator kann beispielsweise elektrische Energie zur Scheibenheizung oder für andere Verbraucher bereitstellen, die keinen Gleichstrom benötigen. Das Signal U_{B} weist im Fall des Wechselstromgenerators gegenüber dem in Figur 1 gezeigten Verlauf einen sinusförmigen oder sinusähnlichen Verlauf auf. In allen Fallen sind Signalstücke enthalten, die einen ersten höherfrequenten Signalanteil F1 aufweisen, dessen Frequenz sich von Bogen zu Bogen geringfügig ändern kann. Diese Änderung ist in Figur 1 zur Verdeutlichung übertrieben eingetragen. Die Frequenzänderungen des ersten Signals F1 wiederholen sich nach den Zeitpunkten T1, T2, T3 usw. Die Periodendauer zwischen den Zeiten T1 und T2 bzw. T2 und T3 entspricht einem zweiten niederfrequenten Signalanteil F2 des Spannungsverlaufs U_{B}, der ebenfalls in allen Fällen enthalten ist. Der zweite Signalanteil F2 entsteht durch die Arbeitszyklen der Brennkraftmaschine. Kurz vor den Zeitpunkten T1, T2, T3 usw. zündet jeweils ein Zylinder der Brennkraftmaschine. Der Explosionsvorgang im Zylinder hat eine Drehzahlerhöhung zur Folge, die während der Expansionsphase wieder abnimmt, bis der nächste Zylinder gezündet hat.

Figur 2 zeigt eine Brennkraftmaschine 10, die wenigstens einen Generator 11 antreibt. Der Generator 11 ist zur Energieversorgung eines elektrischen Bordnetzes 12 des Kraftfahrzeugs vorgesehen. Das Signal U_{B} wird einem ersten Signalfilter 13 zugeführt, dessen Ausgangssignal sowohl einer ersten Schwellwertstufe 14 als auch dem Filter 13 selbst zugeleitet wird. Am Ausgang der ersten Schwellwertstufe 14 tritt der erste Signalanteil F1 auf.

Der Anteil F1 wird sowohl einem im Mittelwertbildner 15 als auch einem FM-Demodulator 16 zugeführt. Das Ausgangssignal des FM-Demodulators 16 wird über ein zweites Signalfilter 17 an eine zweite Schwellwertstufe 18 weitergeleitet. Am Ausgang der zweiten Schwellwertstufe 18 tritt der zweite niederfrequente Signalanteil F2 auf.

Aus dem Anteil F2 und dem gemittelten Frequenzanteil F1 ermittelt eine Recheneinheit 20, die einen Speicher 19 enthält, in Abhängigkeit von einer Zylindervorgabe 21 die Drehzahl n der Brennkraftmaschine.

Figur 3 zeigt einen zeitlich höher aufgelösten Ausschnitt des in Figur 1 gezeigten Spannungsverlaufs U_{B}. Auch in Figur 3 wurde der Gleichanteil weggelassen. Zwischen den parabelbogenähnlichen Signalanteilen F1 sind kurzzeitige Kommutierungsschwingungen 30 mit der Frequenz F3 vorhanden, die auftreten, falls ein Drehstromgenerator mit Gleichrichtern vorgesehen ist.

Figur 4 zeigt einen Teil einer signalverarbeitenden Anordnung zur Ermittlung der Frequenz F1. Die am Bordnetz 12 abgenommene Spannung wird über ein Hochpaßfilter 40 einer monostabilen Kippstufe 41 zugeführt, an deren Ausgang der Signalanteil F1 abnehmbar ist.

Das erfindungsgemäße Verfahren wird anhand von Figur 2 in Verbindung mit dem in Figur 1 gezeigten Signalverlauf näher erläutert:

Die Brennkraftmaschine 10 treibt den Generator 11 an, der zur Versorgung des Bordnetzes 12 des Kraftfahrzeugs vorgesehen ist. Der Generator 11 erzeugt eine ein- oder mehrphasige Wechselspannung, die mit Hilfe von Dioden gleichgerichtet und überlagert wird. Wie bereits dargelegt, kann auch ein Gleichstromgenerator oder ein Wechselstromgenerator ohne Gleichrichter vorgesehen sein. Vorzugsweise an einer am Generator 11 angeschlossenen Last, beispielsweise einer Batterie des Bordnetzes 12, entsteht der in Figur 1 gezeigte Signalverlauf der Bordnetzspannung U_{B}, die einen Wechselspannungsanteil mit parabelbogenähnlichem oder sinusbogenähnlichem Signalverlauf enthält. Dieser charakteristische Signalverlauf ist sowohl aus dem Spannungsabfall am Innenwiderstand der Last im Bordnetz 12 als auch aus dem durch die Last fließenden Strom ableitbar. Sofern der Generator 11 dafür ausgelegt ist, kann er auch ohne Last betrieben werden, wobei das Signal U_{B} direkt am Generator 11 entnommen wird.

Die Drehzahlermittlung beruht darauf, daß die Frequenz des ersten Signalanteils F1 proportional ist zur Drehzahl der Brennkraftmaschine. Der Proportionalitätsfaktor hängt zunächst von der Anzahl der Phasen oder Polzahlen des Generators 11 ab, die fest vorgegeben sind. Ferner hängt der Proportionalitätsfaktor vom Übersetzungsverhältnis zwischen Brennkraftmaschine 10 und dem von der Brennkraftmaschine 10 angetriebenen Generator 11 ab. Das Übersetzungsverhältnis ist in der Regel nicht bekannt und muß zunächst ermittelt werden.

Zur Ermittlung des ersten Signalanteils F1, der unmittelbar ein Maß für die Drehzahl ist, wird in der signalverarbeitenden Anordnung gemäß Figur 2 das Signal U_{B} zunächst einer Bandpaßfilterung mit dem ersten Filter 13 unterzogen. Das Filter 13 trennt sowohl unerwünschte niederfrequente als auch hochfrequente Störsignale ab, wie sie beispielsweise vom Generatorregler oder von sonstigen Schaltvorgängen im Bordnetz 12 des Kraftfahrzeugs verursacht werden.

In einer vorteilhaften Weiterbildung ist das erste Filter 13 als ein adaptives Filter ausgebildet, wofür sich insbesondere eine Realisierung als Digitalfilter oder als Filter mit geschalteten Kapazitäten eignet. Zur Beurteilung des dem ersten Filter 13 zugeführten Signals U_{B} wird dann der Bandpaß über das gesamte Frequenzband geführt und beispielsweise die Ausgangsamplitude des ersten Filters 13 durch Amplitudenmessung bewertet. Da die Störungen nur sporadisch auftreten, die Welligkeit des Signals U_{B} dagegen kontinuierlich anliegt, ist auf diese Weise ein korrektes Setzen der Bandpaßparameter des digitalen Filters oder des Filters mit geschalteten Kapazitäten möglich.

Die erste Schwellwertstufe 14, die gegebenenfalls vorgesehen ist, formt aus dem Signalanteil F1 ein rechteckförmiges Signal, das leicht weiterverarbeitbar ist. Bei bekanntem Übersetzungsverhältnis ist der Anteil F1 unmittelbar ein Maß für die Drehzahl der Brennkraftmaschine.

Gemäß der Erfindung ist vorgesehen, das Übersetzungsverhältnis aus dem Signal U_{B} zu ermitteln. Das Signal U_{B} weist einen zweiten niederfrequenten Signalanteil F2 auf, der zunächst ermittelt werden muß. Der Signalanteil F2 kommt dadurch zustande, daß die Brennkraftmaschine 10 bezogen auf eine höhere zeitliche Auflösung diskontinuierlich arbeitet. Die Zündvorgänge der einzelnen Zylinder der Brennkraftmaschine 10 führen zu einer quasiperiodischen Schwingung mit der zweiten Frequenz F2, die sich aus den quasiperiodischen Vorgängen zwischen Kompressions- und Expansionsphase in den einzelnen Zylindern der Brennkraftmaschine 10 ergeben. Bei bekannter Zylinderzahl ist der Signalanteil F2 ebenfalls unmittelbar ein Maß für die Drehzahl der Brennkraftmaschine 10.

Da das Signal F1 mit dem Signal F2 frequenzmoduliert ist, kann das Signal F2 durch eine FM-Demodulation aus dem Signal mit der Frequenz F1 erhalten werden. In der signalverarbeiteten Anordnung sind deshalb der FM-Demodulator 16 sowie gegebenenfalls das zweite Bandpaßfilter 17 sowie gegebenenfalls die zweite Schwellwertstufe 18 vorgesehen. Das zweite Filter 17 befreit das demodulierte Signal von Störanteilen und die zweite Schwellwertstufe 18 stellt am Ausgang ein leicht weiterverarbeitbares Signal mit der Frequenz F2 zur Verfügung.

Bei höheren Drehzahlen der Brennkraftmaschine 10 kann der Fall eintreten, daß der Signalanteil F2 derart kleine Werte annimmt, daß die Ermittlung der Frequenz F2 mit einfachen Mitteln nicht mehr zuverlässige Ergebnisse liefert. Damit auch in diesem Fall eine zuverlässige Drehzahlmessung erfolgen kann, ist die Recheneinheit 20 vorgesehen, die die Drehzahl n aus dem Verhältnis von der Frequenz F2 und F1 in Abhängigkeit von der Zylindervorgabe 21 aus dem stets vorhandenen Signalanteil F1 ermittelt, wobei das Verhältnis von F2 zu F1 aus dem Speicher 19 entnommen wird, indem es bei Meßbeginn, beispielsweise bei Leerlaufdrehzahl der Brennkraftmaschine 10, abgelegt wird. Der Mittelwertbildner 15 für den Signalanteil mit der Frequenz F1 ist vorteilhafterweise dann vorzusehen, wenn der Mittelwert der Drehzahl n der Brennkraftmaschine ermittelt werden soll. Prinzipiell ist es auch möglich, den Mittelwertbildner 15 am Ausgang der Recheneinheit 20 anzuordnen.

In einer vorteilhaften Weiterbildung des erfindungsgemäßen Verfahrens wird der Signalanteil F1 aus dem Signal U_{B} aus den in Figur 3 gezeigten Kommutierungsschwingungen 30 mit der Frequenz F3 ermittelt. Die Schwingungen 30 treten auf, wenn der Generator 11 als Wechselstrom-/Drehstrom-Generator mit Gleichrichtern ausgestaltet ist. Gemäß Figur 4 wird das dem Bordnetz entnommene Signal U_{B} einem Filter 40 zugleitet, das im einfachsten Fall als Hochpaßfilter ausgebildet ist, dessen untere Grenzfrequenz auf die Frequenz F3 abgestimmt ist. Das Ausgangssignal des Hochpaßfilters 40 wird einer monostabilen Kippstufe 41 zugeführt, die die Möglichkeit einer Re-Triggerung vorsieht, damit die Schwingungspakete jeweils nur einen einzigen Impuls am Ausgang der Kippstufe 41 auslösen. In einem in Figur 4 nicht gezeigten Signalverarbeitungsblock kann das Ausgangssignal der monostabilen Kippstufe einer Plausibilitätskontrolle unterzogen werden, wodurch sich die Störfestigkeit erhöht. Unbrauchbare oder falsche Impulse könnten entstehen von Schaltvorgängen des Generatorreglers oder von anderen elektrischen Verbrauchern im Kraftfahrzeug.

Die in den Figuren 2 und 4 gezeigten signalverarbeitenden Anordnungen 13 bis 21, 40, 41 können vollständig oder teilweise als Software in einem Rechner realisiert sein.

## Patentansprüche

1. Verfahren zur Ermittlung der Drehzahl einer Brennkraftmaschine (10) mit bekannter Zylinderzahl, die mit vorgegebenem Übersetzungsverhältnis einen Generator (11) antreibt, mit einer signalverarbeitenden Anordnung (13 - 21), welche die Drehzahl aus einem am Generator (11) oder an einer Last auftretenden Signal (U_{B}) ermittelt, das einen ersten Signalanteil (F1) enthält, der einem Wechselspannungsanteil der vom Generator (11) erzeugten Spannung entspricht, und welche einen zweiten, niederfrequenteren Signalanteil (F2) ermittelt, der durch die diskontinuierliche Arbeitsweise der Brennkraftmaschine, bedingt durch die Verbrennung in den einzelnen Zylindern, verursacht ist, wobei der erste Signalanteil (F1) mit dem zweiten Signalanteil (F2) frequenzmoduliert ist, und welche das Übersetzungsverhältnis zwischen Brennkraftmaschine (10) und Generator (11) aus dem Verhältnis der Frequenz des ersten Signalanteils (F1) und der Frequenz des zweiten Signalanteils (F2) bestimmt.

2. Verfahren nach Anspruch 1, mit einem FM-Demodulator zum Ermitteln der Frequenz des zweiten, niederfrequenteren Signalanteils (F2) aus dem ersten Signalanteil (F1).

3. Verfahren nach Anspruch 1 oder 2, mit einem adaptiven Filter (13) zum Herausfiltern des ersten Signalanteils (F1) aus dem Signal (U_{B}).

4. Verfahren nach einem der Ansprüche 1 bis 3, mit einem als Wechselstrom-/Drehstrom-Generator mit Gleichrichter ausgebildeten Generator (11), mit einer weiteren signalverarbeitenden Anordnung (40, 41), die die Frequenz des ersten Signalanteils (F1) aus Kommutierungsschwingungen (30) des Signals (U_{B}) ermittelt.

5. Verfahren nach Anspruch 4, mit einer Plausibilitätskontrolle des von der weiteren signalverarbeitenden Anordnung (40, 41) abgegebenen Signals mit der Frequenz, die der des Signalanteils (F1) entspricht.

6. Verfahren nach Anspruch 1 und 2, mit einer Recheneinheit (20), in der das Verhältnis der Frequenzen des ersten Signalanteils (F1) und des zweiten, niederfrequenteren Signalanteils (F2) ermittelt und zur Berechnung der Drehzahl abgelegt wird.

## Claims

1. Method for determining the speed of an internal-combustion engine (10) with a known number of cylinders, which drives a generator (11) with a predetermined step-up ratio, with a signal-processing arrangement (13 - 21) which determines the speed from a signal (U_{B}) occurring at the generator (11) or at a load and containing a first signal component (F1) corresponding to an alternating-voltage component of the voltage generated by the generator (11), and which determines a second lower-frequency signal component (F2) which is caused by the discontinuous mode of operation of the internal-combustion engine brought about by the combustion in the individual cylinders, the first signal component (F1) being frequency-modulated with the second signal component (F2), and which determines the step-up ratio between the internal-combustion engine (10) and the generator (11) from the ratio of the frequency of the first signal component (F1) and the frequency of the second signal component (F2).

2. Method according to Claim 1, with an FM demodulator for determining the frequency of the second lower-frequency signal component (F2) from the first signal component (F1).

3. Method according to Claim 1 or 2, with an adaptive filter (13) for filtering out the first signal component (F1) from the signal (U_{B}).

4. Method according to one of Claims 1 to 3, with a generator (11) designed as an alternating-current/rotary-current generator with rectifier, with a further signal-processing arrangement (40, 41) which determines the frequency of the first signal component (F1) from the commutator vibrations (30) of the signal (U_{B}).

5. Method according to Claim 4, with a plausibility check of the signal emitted by the further signal-processing arrangement (40, 41) and having the frequency corresponding to that of the signal component (F1).

6. Method according to Claims 1 and 2, with a computing unit (20), in which the ratio of the frequencies of the first signal component (F1) and of the second, lower-frequency signal component (F2) is determined and is filed for calculating the speed.

## Revendications

1. Procédé pour déterminer la vitesse de rotation d'un moteur à combustion interne (10) ayant un nombre connu de cylindres, entraînant un générateur (11) selon un rapport de démultiplication prédéterminé, avec un montage (13 - 21) de traitement du signal qui détermine la vitesse de rotation à partir d'un signal U_{B} pris sur le générateur (11) ou sur une charge, ce signal comportant une première composante de signal (F1) correspondant à une composante de tension alternative de la tension fournie par le générateur (11) et qui détermine une seconde composante de signal (F2), de fréquence plus basse, engendrée par le fonctionnement discontinu du moteur à combustion interne provoquée par la combustion dans les différents cylindres, la première composante de signal (F1) étant modulée en fréquence avec la seconde composante de signal (F2) qui détermine le rapport de démultiplication entre le moteur thermique (10) et le générateur (11) à partir du rapport de la fréquence de la première composante de signal (F1) et de la fréquence de la seconde composante de signal (F2).

2. Procédé selon la revendication 1, comportant un démodulateur MF pour déterminer la fréquence de la seconde composante de signal (F2), de fréquence plus basse à partir de la première composante de signal (F1).

3. Procédé selon la revendication 1 ou 2 comportant un filtre adaptatif (13) pour séparer par filtrage la première composante de signal (F1) à partir du signal (U_{B}).

4. Procédé selon l'une des revendications 1 à 3, comportant un générateur en forme d'alternateur avec des redresseurs (11), un autre montage de traitement de signal (40, 41) qui détermine la fréquence de la première composante de signal (F1) à partir des oscillations de commutation (30) du signal (U_{B}).

5. Procédé selon la revendication 4, avec un contrôle de plausibilité du signal fourni par l'autre montage de traitement de signal (40, 41) et ayant la fréquence qui correspond à la composante de signal (F1).

6. Procédé selon les revendications 1 et 2, comportant un calculateur (20) dans lequel on détermine le rapport de la fréquence de la première composante de signal (F1) et celle de la seconde composante de signal (F2) de fréquence plus faible, et on enregistre ce rapport pour calculer la vitesse de rotation.
